# EUROPÄISCHE PATENTSCHRIFT

(11) **EP 2 807 910 B1**
(45) Veröffentlichungstag und Bekanntmachung des Hinweises auf die Patenterteilung: **28.03.2018**
(21) Anmeldenummer: 13169369.9
(22) Anmeldetag: 27.05.2013
(51) Int. Cl.: A01B 21/08, A01C 7/20

(54) **Werkzeugträger mit Schweißverbindung**
Tool holder with a welded connection
Porte-outil avec liaison soudée

(43) Veröffentlichungstag der Anmeldung: 03.12.2014
(73) Patentinhaber: Horsch Maschinen GmbH, 92421 Schwandorf (DE)
(72) Erfinder: Horsch, Philipp, 92421 Schwandorf (DE)
(74) Vertreter: Benninger, Johannes

(56) Entgegenhaltungen:
- WO-A1-2010/144025
- DE-A1- 10 343 466
- DE-U1-202006 002 348
- US-A- 2 790 367
- US-A- 5 279 236

## Beschreibung

Die vorliegende Erfindung betrifft einen Werkzeugträger einer landwirtschaftlichen Maschine zum Ausbringen von Saatgut oder zur Bodenbearbeitung, mit den Merkmalen des unabhängigen Anspruch 1.

Im Bereich der landwirtschaftlichen Bodenbearbeitungs- und Sämaschinen ist eine Vielzahl von verschiedenen Werkzeugen und Säscharen, zum Bearbeiten des Bodens oder zum Ausbringen von Saatgut oder dergl. bekannt. Die Werkzeuge und Säschare werden an einem Werkzeugträger befestigt, bzw. montiert. Diese Werkzeugträger werden anschließend an einer in der landwirtschaftlichen Maschine dafür vorgesehen Position angebracht.

Oft werden verschiedene Werkzeuge so kombiniert, dass diese eine Einheit bilden, und somit für spezielle Anwendungsfälle verwendet werden können. Eine im Bereich der Sätechnik häufig aufzufindende Kombination von Werkzeugen stellt ein Doppelscheibenschar dar. Ein derartiges Doppelscheibenschar ist bspw. aus der EP 2 422 599 A1 bekannt. Doppelscheibenschare werden bspw. zum Ausbringen von Saatgut und Dünger oder dergl. verwendet.

Bei bekannten Doppelscheibenscharen besteht der Werkzeugträger aus einem Längsträger, welcher in der Regel als Hohlkörper ausgebildet ist und aus einem Flanschelement. Das Flanschelement wird meistens quer zur Fahrtrichtung am vorderen Ende des Längsträgers stirnseitig und mittig angebracht. Mit dem Flanschelement kann der Werkzeugträger bzw. das Doppelscheibenschar an einer in der landwirtschaftlichen Maschine dafür vorgesehen Vorrichtung montiert werden.

Bei einem Doppelscheibenschar sind am Werkzeugträger zwei Scharscheiben angebracht, die in der Regel V-förmig zueinander angestellt sind. Im Betrieb wirkt auf das Doppelscheibenschar ein voreingestellter Schardruck, wodurch die Scharscheiben in den Boden gedrückt werden. Durch die Fahrbewegung der landwirtschaftlichen Gerätekombination werden die Scharscheiben gleichzeitig angetrieben und schneiden, aufgrund ihrer V-förmigen Anstellung, einen Schlitz bzw. ziehen eine Längsfurche in den Boden. Zwischen den beiden Scharscheiben befindet sich i.d.R. ein Saatführungskanal, durch den das in die Furche abzulegende Saatgut in die durch die Scharscheiben geschlitzte Furche gefördert wird. Um optimale Keimbedingungen des Saatgutes sicherzustellen, wird das Saatgut abschließend noch mittels einer Druckrolle angedrückt. Der Anpressdruck dieser Druckrolle ist wiederum durch den voreingestellten Schardruck definiert. Die Druckrolle hat zudem die Aufgabe, das Doppelscheibenschar entlang der Bodenkontur in der Tiefe zu führen.

Der Werkzeugträger wird in der Regel bis zu einem gewissen Winkel drehbar an einem in der landwirtschaftlichen Maschine vorgesehenen Querträger montiert. Die Lagerung zwischen Doppelscheibenschar und Querträger kann auf vielfältige Weise erfolgen. Eine in landwirtschaftlichen Maschinen häufig verwendete Lagerung ist die sog. Gummischnurlagerung, wie sie bspw. aus der WO 2010 144 025 A1 bekannt ist. In diesem Fall handelt es sich um eine Lagerung die aus drei Gummischnurelementen aufgebaut ist. Es gibt jedoch auch Lagerungen die aus vier Gummischnurelementen bestehen. Ebenso wären hier auch andere Lagerungselemente vorstellbar.

Durch den voreingestellten Schardruck sowie durch Steinschläge oder dergl. werden auf das Doppelscheibenschar Kräfte ausgeübt. Diese müssen durch den Werkzeugträger aufgenommen werden können. Ebenso entstehen, wiederum durch Steinschläge, aber auch durch Unebenheiten des Bodens, Vibrationen, welche durchaus

10 Hz und mehr betragen können. Auch diese müssen vom Werkzeugträger aufgenommen werden können. Die genannten Kräfte und Vibrationen stellen hohe Anforderungen in Bezug auf die Haltbarkeit an den Werkzeugträger. Als Schwachstelle des Werkzeugträgers hat sich hier die Verbindung zwischen dem Längsträger und dem Flanschelement herausgestellt. Wobei hierbei in der Regel das Flanschelement stumpf auf die Stirnseite des Längsträgers angeschweißt wird.

Um dieser Schwachstelle entgegen zu wirken, wurden bislang verschiedene Lösungsansätze verfolgt. So sind Lösungsansätze bekannt, bei denen um eine bessere Verbindung zwischen Flanschplatte und Längsträger zu erreichen, seitlich auf den Längsträger zusätzliche Bleche, sog. Versteifungs- oder Knotenbleche, angebracht werden. Durch diese zusätzlichen Knotenbleche wird die Schweißnaht länger, was sich positiv auf die Haltbarkeit auswirken soll. Diese zusätzlichen Bleche bringen jedoch den Nachteil mit sich, dass diese aufwendig in deren Herstellung sind. Darüber hinaus verursachen diese zusätzlich benötigten Bleche Kosten, was sich ebenfalls negativ auswirkt.

Beispielsweise wird durch die DE 103 43 466 A1 ein Bodenbearbeitungsgerät mit einem Rahmen und daran quer zur Arbeitsrichtung angeordneten Scheibenträgern und Scheibensätzen beschrieben, welche Scheibensätze über Stiele an den Scheibenträger befestigt sind. Die Lagerung der Stiele am Scheibenträger erfolgt über zwei miteinander verschraubter Lagerschalen, wobei jeweils eine der Lagerschalen mit dem Stiel verschweißt ist.

Eine weitere landwirtschaftliche Maschine wird durch die WO 2010/144025 A1 offenbart, bei welcher die Werkzeuge über einen Längsträger an einem Querträger gelagert sind. Die Lagerung des Längsträgers erfolgt mittels gebogener Bleche bzw. Flanschelemente, wobei Teile der Flanschelemente nach innen gebogen sind und auf diese Weise Anschläge ausbilden. Zumindest eines der Bleche kann mit dem Längsträger verschweißt sein.

Weiter sind Werkzeugträger bekannt, bei denen der als Hohlkörper ausgebildete Längsträger als gekantetes Blech geformt ist. Hierdurch ergibt sich die Möglichkeit, den Querschnitt des Längsträgers so zu gestalten, dass dieser im vorderen Bereich, also im Bereich an dem das Flanschelement angeschweißt wird, am größten ist, wodurch wiederum die Länge der Schweißnaht und somit die Haltbarkeit erhöht werden kann. Jedoch ist die Herstellung des Längsträgers aus einem Blech sehr teuer, da hierfür mehrere Arbeitsgänge erforderlich sind. Darüber hinaus muss der Querschnitt sehr stark vergrößert werden, um hiermit die erforderliche Haltbarkeit zu erreichen. Dadurch wir jedoch der Materialaufwand erhöht, was sich negativ auf den Preis auswirkt, darüber hinaus leidet hierunter auch die Optik bzw. das Design des Werkzeugträgers.

Ein Ziel der vorliegenden Erfindung besteht darin, die Schweißverbindung eines hochdynamisch beanspruchten Werkzeugträgers einer landwirtschaftlichen Maschine so zu gestalten, dass die Haltbarkeit des Werkzeugträgers ohne zusätzliche Bauteile um ein vielfaches erhöht wird.

Dieses Ziel der Erfindung wird mit dem Gegenstand des unabhängigen Patentanspruchs erreicht. Merkmale vorteilhafter Weiterbildungen der Erfindung ergeben sich aus den abhängigen Ansprüchen. So schlägt die Erfindung zur Erreichung des genannten Ziels einen Werkzeugträger vor, bei dem die Verbindung zwischen einem Flanschelement und einem Längsträger nicht mehr wie bisher stumpf erfolgt, sondern bei dem die zu verbindenden Elemente jeweils eine zumindest annähernd V-förmige Kontur bzw. Verbindungsfläche aufweisen und die zu verbindenden Elemente entlang und/oder im Bereich dieser Flächen verschweißt werden.

So sind ein Längsträger bzw. und Flanschelement vorgesehen, bei denen jeweils ein annähernd V-förmiger Ausschnitt bzw. eine annähernd V-förmige Kontur angebracht ist. Über die durch die V-förmige Kontur entstehenden Verbindungsflächen können die beiden Teile zum einen positioniert werden, zum anderen werden an diesen Verbindungsflächen die beiden Teile mittels Schweißung verbunden.

Diese Art der Verbindung bzw. Gestaltung des Werkzeugträgers liefert gegenüber den bisher bekannten Werkzeugträgern wesentliche Haltbarkeits- bzw. Festigkeitsverbesserung. So ist für die Ermittlung der Haltbarkeit der Verbindung die tragende Fläche ausschlaggebend. Bei einer stumpfen Verbindung ist diese Fläche die Summe der durch die Schweißnähte entstandenen Fläche. Bei der stumpfen Anbindung erstreckt sich diese Fläche in vertikaler Richtung entlang der Stoßfläche der beiden Einzelteile.

Bei einer Verbindung, wie sie die Erfindung vorsieht, wird diese tragende Fläche wesentlich erhöht. So wird zum einen durch die V-Form die Schweißnaht verlängert. Darüber hinaus setzt sich bei einer erfindungsgemäßen Verbindung die tragende Fläche nicht mehr nur aus der Summe der Schweißnähte zusammen, sondern in diesem Fall sind auch noch die V-förmigen Verbindungsflächen zur Ermittlung der Haltbarkeit hinzuzurechnen. Weiter ist die Richtung der Tragenden Fläche nicht mehr vertikal, sondern horizontal entlang der V-förmigen Verbindungsfläche, wodurch die Krafteinleitung in die Verbindung gleichmäßiger erfolgt.

Durch das Ineinandergreifen der beiden V-förmigen Konturen wird darüber hinaus die Positionierung der Einzelteile für den Schweißvorgang erleichtert, da sich beide Teile gegenseitig zentrieren.

Die Ausgestaltung der beiden zu verbindenden Teile kann hierbei auf vielfältige Weise erfolgen. So kann das Flanschelement zum einen aus einem gekanteten Blech gefertigt werden. Darüber hinaus wäre es auch denkbar, dass das Flanschelement als Gußteil gefertigt wird. Ebenso vorstellbar wäre es, dass das Flanschelement aus einem Vollmaterial gefertigt wird. Eine bevorzugte Variante sieht vor, dass das Flanschelement als sog. Schmiedeteil gefertigt wird.

Auch für den Längsträger ergibt sich eine Vielzahl von Gestaltungsmöglichkeiten. So wäre es vorstellbar, dass der Längsträger als Hohlprofil oder als Quadratrohr gestaltet ist. Ebenso wäre es eine Möglichkeit, dass der Längsträger aus einem Rohr gefertigt wird. Auch könnte der Längsträger aus einem gekanteten Blech gefertigt werden. Eine bevorzugte Variante sieht die Fertigung des Längsträgers durch sog. Hydroforming vor. Durch diese Art der Fertigung ergibt sich der Vorteil, dass der Querschnitt des Längsträgers über die Länge hinweg angepasst werden kann, so dass an Stellen, an denen aufgrund der Belastung ein höherer Querschnitt benötigt wird, das Profil aufgeweitet werden kann.

Es sei hier noch mit erwähnt das die Verbindung der beiden Werkzeugträgerelemente, auch nur annähernd als V-Kontur erflogen kann, so wäre es auch denkbar, dass die Spitze der V-Kontur abgerundet wird, so dass sich keine scharfe V-Kontur mehr ergibt sondern eine annähernd halbrunde Kontur.

Anhand der vorstehenden Beschreibung konnte verdeutlicht werden, dass das formulierte Ziel der Erfindung, eine verbesserte Haltbarkeit eines Werkzeugträgers zu erzielen, erreicht werden kann. Ferner kann auch die Positionierung der Teile durch die Verbindung erleichtert werden. Ebenso können durch die entsprechende Gestaltung der einzelnen Elemente Teile und somit Kosten reduziert werden.

Im Folgenden sollen Ausführungsbeispiele die Erfindung und Ihre Vorteile anhand der beigefügten Figuren näher erläutern. Weitere Merkmale, Ziele und Vorteile der vorliegenden Erfindung gehen aus der nun folgenden detaillierten Beschreibung einer Ausführungsform der Erfindung hervor, die nicht als einschränkendes Beispiel dient und auf die beigefügten Zeichnungen Bezug nimmt.
Fig. 1 zeigt eine schematische Perspektivansicht einer Werkzeuganordnung in Form eines Doppelscheibenschares.
Fig. 2a zeigt eine schematische Perspektivansicht eines Werkzeugträgers, wie er in der Doppelscheibenschar, wie in Fig. 1 dargestellt, verwendet wird.
Fig. 2b zeigt eine schematische Seitenansicht des Werkzeugträgers gemäß Fig. 2a
Fig. 3a zeigt eine schematische Perspektivansicht einer weiteren Ausführungsvariante eines Werkzeugträgers, bei der der Längsträger als Rohr und das Flanschelement als Schmiedeteil ausgeführt sind.
Fig. 3b zeigt eine schematische Seitenansicht des Werkzeugträgers gemäß Fig. 3a.
Fig. 4a zeigt eine schematische Perspektivansicht einer weiteren Ausführungsvariante eines Werkzeugträgers, bei der der Längsträger als Hohlprofil und das Flanschelement als Blech ausgeführt sind.
Fig. 4b zeigt eine schematische Perspektivansicht einer weiteren Ausführungsvariante eines Werkzeugträgers, bei der der Längsträger als Rohr und das Flanschelement als Blech ausgeführt sind.

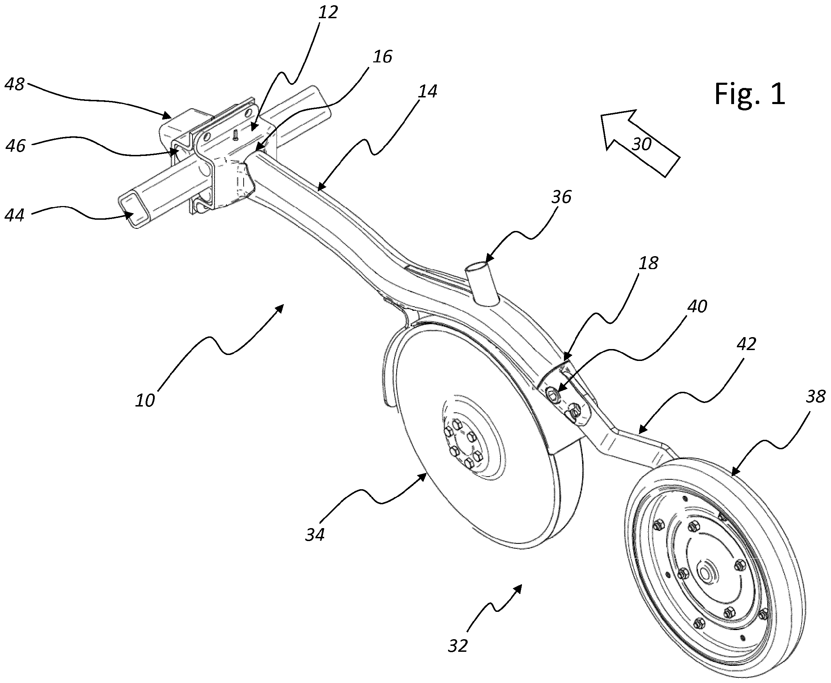

Für gleiche oder gleich wirkende Elemente der Erfindung werden in den Figuren 1 bis 4 jeweils gleiche Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie der erfindungsgemäße Werkzeugträger ausgestaltet sein kann und stellen keine abschließende Begrenzung dar.

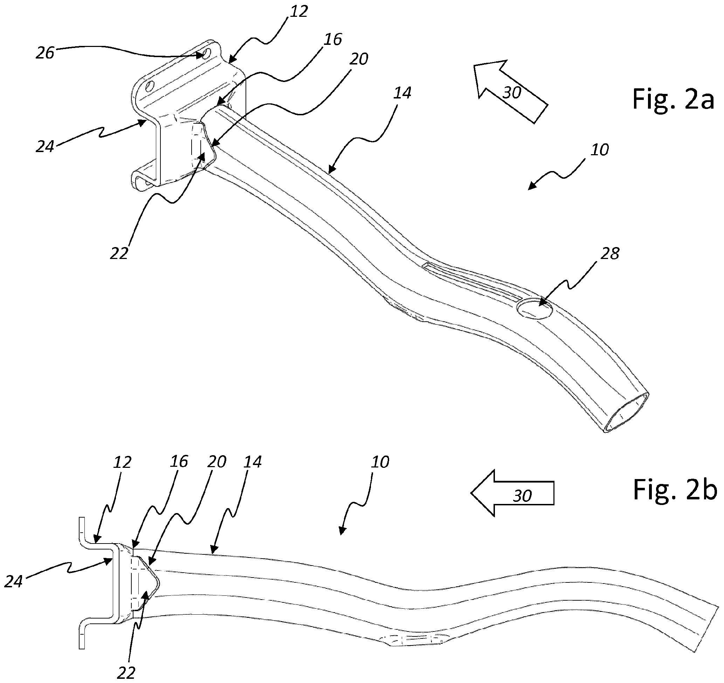

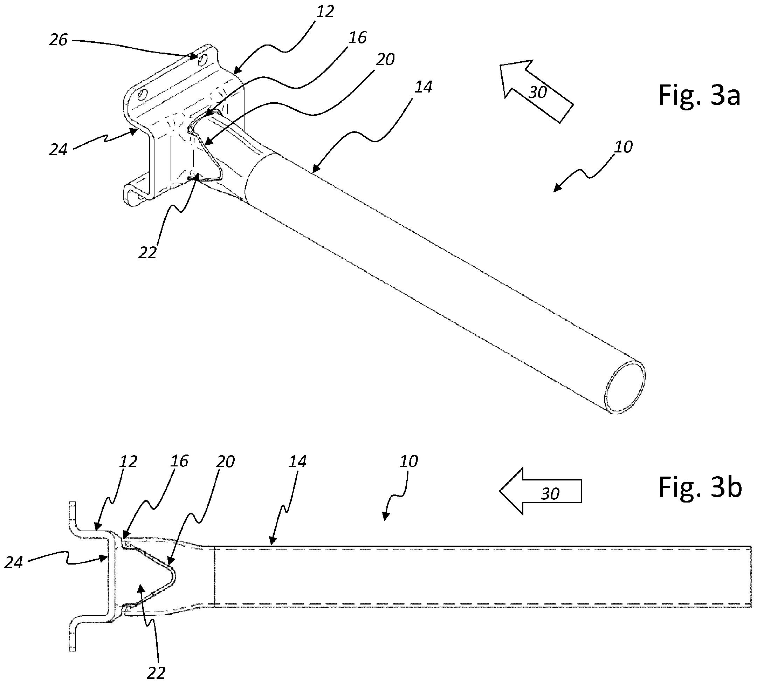

Anhand der schematischen Perspektivdarstellungen der Figuren 1, 2a, 3a sowie der Figuren 4 und der schematischen Seitenansichten der Figuren 2b und 3b sollen der Aufbau und die grundsätzliche Funktionsweise eines Ausführungsbeispiels des erfindungsgemäßen Werkzeugträgers verdeutlicht werden, der bspw. Teil einer landwirtschaftlichen Maschine sein kann.

So verdeutlicht die Fig. 1 in einer schematischen Perspektivansicht eine Ausführungsvariante eines Werkzeugträgers 10, der aus einem Flanschelement 12 und einem Längsträger 14 gebildet ist,.An dem Werkzeugträger 10 sind Elemente bzw. Werkzeuge so angebracht, das deren Werkzeuganordnung ein Doppelscheibenschar 32 bilden. So sind im hinteren Drittel (in Fahrtrichtung 30 gesehen) des Werkzeugträgers 10 über ein hier nicht dargestelltes Befestigungselement zwei Scharscheiben 34 in einem Winkel zueinander angebracht. Diese Scharscheiben 34 ziehen im Betrieb eine Furche, in die, mittels eines zwischen den Scharscheiben 34 mündenden Saatführungskanal 36, das auszubringende Material abgelegt wird. Eine an der rückseitigen Stirnseite 18 des Längsträger 14 über eine starre oder drehbar einstellbare Drehlagerung 40 und mittels Verbindungsträger 42 geführte Druckrolle 38 sorgt für das Schließen der Furche, für das Andrücken des ausgebrachten Materials sowie normalerweise für die Tiefenführung des Doppelscheibenschares.

Das Flanschelement 12 ist an der vorderen Stirnseite 16 (in Fahrtrichtung 30 gesehen) des Längsträgers 14 mittig des Werkzeugträgers 10 angebracht. Durch das Flanschelement 12 wird zum einen der Werkzeugträger 10 mittels Gummilagerung bzw. mittels Gummischnurelementen 46 an einem Querträger 44 gelagert. Zum andern wird mit dem Flanschelement 12 der Werkzeugträger 10 mit einem Spannelement 48 an einem Querträger 44 gehalten und fixiert. Der Querträger 44 kann bspw. Teil eines Maschinenrahmens sein und mehrere solcher Werkzeuganordnungen 32 aufweisen, die jeweils in regelmäßigen Abständen parallel nebeneinander angeordnet sein können.

Die schematische Perspektivansicht der Fig. 2a sowie die schematische Seitenansicht der Fig. 2b zeigen einen Werkzeugträger 10 wie er bei der Werkzeuganordnung 32 der Fig. 1 Verwendung findet. Der Längsträger 14 ist in diesem Fall ein durch sog. Hydroforming gefertigter Holkörper, an dessen vorderer Stirnseite 16 ein annähernd V-förmiger Ausschnitt angebracht ist, durch welchen die Verbindungsflächen 20 des Längsträgers 14 entstehen. Mittels der Verbindungsflächen 20 wird an der vorderen Stirnseite 16 des Längsträgers 14 ein Flanschelement 12 angebracht.

Das Flanschelement 12 weißt im hinteren Bereich (in Fahrtrichtung 30 gesehen) eine V-förmige Kontur 22 auf. Mit Hilfe dieser V-förmigen Kontur 22 sowie der Verbindungsfläche 20 werden das Flanschelement 12 und der Längsträger 14 verbunden, in dem Entlang der Verbindungsfläche 20 sowie der vorderen Stirnseite 16 eine Schweißnaht angebracht wird.

Darüber hinaus weist das Flanschelement 12 Lagerflächen 24 auf, an denen sich Gummischnurelemente 46 anlegen bzw. abstützen können und somit der Werkzeugträger 10 an einem an der landwirtschaftlichen Maschine vorgesehen Querträger 44 gelagert werden kann. Ferner enthält das Flanschelement 12 Bohrungen 26 mit denen der Werkzeugträger 10 montiert werden kann. Im Längsträger 14 sind darüber hinaus im hinteren Bereich Ausschnitte 28 erkennbar, an denen bspw. der Saatführungskanal 36 montiert werden kann.

Die schematische Perspektivansicht der Fig. 3a, sowie die schematische Seitenansicht der Fig. 3b zeigen eine weitere Gestaltungsmöglichkeit eines Werkzeugträgers 10. Wobei das Flanschelement 12 die gleichen Elemente wie das Flanschelement 12 der Figuren 2 enthält. So besitzt auch dieses im hinteren Bereich (in Fahrtrichtung 30 gesehen) eine V-förmige Kontur 22. Darüber hinaus sind auch hier Lagerflächen 24 sowie Bohrungen 26 vorhanden. Der Längsträger 14 ist als runder Hohlkörper gestaltet, der in einem vorderen Bereich einen annähernd V-förmigen Ausschnitt enthält, mit welchem die Verbindungsflächen 20 entstehen. Der Längsträger weißt zudem im vorderen Bereich eine Querschnittserweiterung auf. Auch bei diesem erfindungsgemäßen Ausführungsbeispiel werden die beiden Einzelteile entlang der Verbindungsflächen 20 sowie entlang der vorderen Stirnseite 16 des Längsträgers 14 gemeinsam verschweißt.

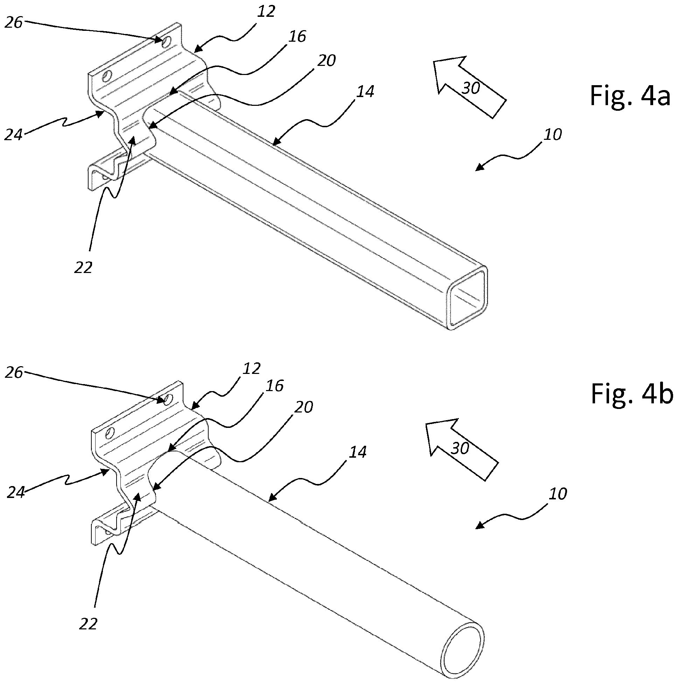

Durch die schematischen Perspektivansichten der Fig. 4a und 4b sind weitere Ausführungsbeispiele eines Werkzeugträgers 10 dargestellt. Wie es die Darstellungen erkennen lassen, wurde das Flanschelement 12 in diesen Beispielen als gekantetes Blechteil gefertigt. In einem hinteren Bereich (in Fahrtrichtung 30 gesehen) weist das Flanschelement 12 eine V-förmige Kontur 22 auf. Darüber hinaus sind Lagerflächen 24 vorhanden, an welchen sich Gummischnurelemente 46 anlegen bzw. abstützen können und somit der Werkzeugträger 10 gelagert werden kann. Ebenso enthält das Flanschelement 12 Bohrungen 26 mit denen der Werkzeugträger 10 montiert werden kann.

In beiden Beispielen der Figuren 4 sind die Längsträger 14 als Hohlkörper ausgebildet. Wie in Fig. 4a ersichtlich mit quadratischem Querschnitt und wie in Fig. 4b dargestellt mit rundem Querschnitt. Die zwei dargestellten Längsträger 14 weisen an deren vorderen Bereichen (in Fahrtrichtung 30 gesehen) einen annähernd V-förmigen Ausschnitt auf, durch welchen die Verbindungsflächen 20 entstehen. Die zwei Elemente des Werkzeugträgers 10 werden entlang der Verbindungsflächen 20 sowie der vorderen Stirnseiten 16 des Längsträgers 14 mittels Schweißnaht verbunden.

Die Erfindung wurde unter Bezugnahme auf eine bevorzugte Ausführungsform beschrieben. Es ist jedoch für den Fachmann vorstellbar, das Abwandlungen oder Änderungen der Erfindung gemacht werden könne, ohne dabei den Schutzbereich der nachstehenden Ansprüche zu verlassen.

### Bezugszeichenliste:

- 10: Werkzeugträger
- 12: Flanschelement
- 14: Längsträger
- 16: vordere Stirnseite
- 18: hintere Stirnseite
- 20: Verbindungsfläche
- 22: V-förmige Kontur
- 24: Lagerfläche
- 26: Bohrung, Montagevorrichtung
- 28: Ausschnitt
- 30: Fahrtrichtung
- 32: Werkzeuganordnung; Doppelscheibenschar
- 34: Scharscheibe
- 36: Saatführungskanal
- 38: Druckrolle
- 40: Drehlagerung
- 42: Verbindungsträger
- 44: Querträger; Rahmenelement
- 46: Gummischnurelement
- 48: Spannelement

## Patentansprüche

1. Werkzeugträger (10) einer landwirtschaftlichen Maschine zum Ausbringen von Saatgut oder zur Bodenbearbeitung, insbesondere einer Sämaschine oder Säkombination, an dem Werkzeuge, Scharelemente o. dgl. angeordnet sind, und der Werkzeugträger (10) aus wenigstens zwei Elementen zusammengesetzt ist und diese als ein Flanschelement (12) und als ein Längsträger (14) ausgebildet sind, wobei das zumindest eine Flanschelement (12) an die vordere Stirnseite (16) des wenigstens einen Längsträgers (14) mittig des Werkzeugträgers (10) angebracht ist, wobei das wenigstens eine Flanschelement (12) im hinteren Bereich in Fahrtrichtung gesehen und der wenigstens eine Längsträger (14) jeweils eine annähernd V-förmige Kontur (22) bzw. Verbindungsfläche (20) aufweisen und wobei diese wenigstens zwei Elemente über diese V-förmige Kontur (22) bzw. Verbindungsfläche (20) gegenseitig positioniert und verbunden werden, **dadurch gekennzeichnet, dass** entlang der Verbindungsfläche (20) sowie der vorderen Stirnseite (16) des Längsträgers (14) eine Schweißnaht angebracht wird.

2. Werkzeugträger nach Anspruch 1, bei dem die wenigstens zwei Elemente annähernd symmetrisch zueinander angeordnet sind.

3. Werkzeugträger nach Anspruch 1, bei dem zumindest eines der wenigstens zwei Elemente als Hohlkörper ausgebildet ist.

4. Werkzeugträger nach einem der vorhergehenden Ansprüche, bei dem zumindest eines der wenigstens zwei Elemente eine annähernd V-förmige Kontur (22) aufweist.

5. Werkzeugträger nach einem der vorhergehenden Ansprüche, bei dem zumindest eines der wenigstens zwei Elemente eine annähernd V-förmige Verbindungsfläche (20) aufweist.

6. Werkzeugträger nach einem der vorhergehenden Ansprüche, bei dem die annähernd V-förmige Verbindungsfläche (20) oder die annähernd V-förmige Kontur (22) an deren Endbereichen mit Rundungen versehen sind.

7. Werkzeugträger nach einem der vorhergehenden Ansprüche, bei dem zumindest eines der wenigstens zwei Elemente Montagevorrichtungen (26) aufweist.

8. Werkzeugträger nach einem der vorhergehenden Ansprüche, bei dem zumindest eines der wenigstens zwei Elemente als Blechteil ausgeführt ist.

9. Werkzeugträger nach einem der vorhergehenden Ansprüche 3 bis 8, bei dem das wenigstens eine als Hohlkörper gestaltetes Element als Hohlprofil ausgeführt ist.

10. Werkzeugträger nach einem der vorhergehenden Ansprüche 3 bis 8, bei dem das wenigstens eine als Hohlkörper gestaltete Element als Rohr ausgeführt ist.

11. Werkzeugträger nach einem der vorhergehenden Ansprüche 3 bis 8, bei dem das wenigstens eine als Hohlkörper gestaltete Element als hydroforming Teil ausgeführt ist.

12. Werkzeugträger nach einem der vorhergehenden Ansprüche 3 bis 8, bei dem das wenigstens eine als Hohlkörper gestaltete Element einen zumindest annähernd quadratischen Querschnitt aufweist.

13. Werkzeugträger nach einem der vorhergehenden Ansprüche 3 bis 8, bei dem das wenigstens eine als Hohlkörper gestaltete Element verschiedene Querschnitte aufweist.

14. Werkzeugträger nach einem der vorhergehenden Ansprüche, bei dem wenigstens eines der wenigstens zwei Elemente als Schmiedeteil ausgeführt ist.

15. Werkzeugträger nach einem der vorhergehenden Ansprüche, bei dem wenigstens eines der wenigstens zwei Elemente als Gussteil ausgeführt ist.

## Claims

1. An implement carrier (10) of an agricultural machine for spreading seeds or for soil tillage, in particular, of a sowing machine or sowing combination, on which implement carrier (10) implements, coulter elements, or the like, are disposed, and which implement carrier (10) is composed of at least two elements, and said elements are designed as a flange element (12) and as a longitudinal carrier (14), wherein the at least one flange element (12) is mounted centrally on the implement carrier (10) to the front end face (16) of the at least one longitudinal carrier (14), wherein the at least one flange element (12) in the rear area as seen in driving direction (30) and the at least one longitudinal carrier (14) each have an approximately V-shaped contour (22) or, as the case may be, connecting surface (20), and wherein said at least two elements are positioned in relation to each other and connected by way of said V-shaped contour (22) or, as the case may be, connecting surface (20), **characterised in that** a welding seam is placed along the connecting surface (20) as well as along the front end face (16) of the longitudinal carrier (14).

2. The implement carrier as recited in claim 1, with the at least two elements being disposed approximately symmetrical to each other.

3. The implement carrier as recited in claim 1, with at least one of the at least two elements being designed as hollow body.

4. The implement carrier as recited in one of the previous claims, with at least one of the at least two elements having an approximately V-shaped contour (22).

5. The implement carrier as recited in one of the previous claims, with at least one of the at least two elements having an approximately V-shaped connecting surface (20).

6. The implement carrier as recited in one of the previous claims, with the approximately V-shaped connecting surface (20) or the approximately V-shaped contour (22) being rounded at their end sections.

7. The implement carrier as recited in one of the previous claims, with at least one of the at least two elements having mounting fixtures (26).

8. The implement carrier as recited in one of the previous claims, with at least one of the at least two elements being designed as sheet metal part.

9. The implement carrier as recited in one of the previous claims 3 to 8, with the at least one element that is designed as hollow body being formed as hollow profile.

10. The implement carrier as recited in one of the previous claims 3 to 8, with the at least one element that is designed as hollow body being formed as tube.

11. The implement carrier as recited in one of the previous claims 3 to 8, with the at least one element that is designed as hollow body being formed as hydroforming part.

12. The implement carrier as recited in one of the previous claims 3 to 8, with the at least one element that is designed as hollow body having an at least approximately square cross section.

13. The implement carrier as recited in one of the previous claims 3 to 8, with the at least one element that is designed as hollow body having varying cross sections.

14. The implement carrier as recited in one of the previous claims, with at least one of the at least two elements being designed as forging part.

15. The implement carrier as recited in one of the previous claims, with at least one of the at least two elements being designed as casting part.

## Revendications

1. Porte-outil (10) d'une machine agricole pour l'épandage de semences ou pour la culture du sol, en particulier d'un semoir ou d'une combinaison à semer, sur lequel sont disposés des outils, des éléments de soc ou similaires, et ledit porte-outil (10) est composé d'au moins deux éléments et ceux-ci sont réalisés comme un élément à bride (12) et comme un longeron (14), dans lequel ledit au moins un élément à bride (12) est monté sur la face frontale avant (16) dudit au moins un longeron (14) au milieu du porte-outil (10), dans lequel ledit au moins un élément à bride (12), dans la zone arrière vue dans la direction de marche (30), et ledit au moins un longeron (14) présentent chacun un contour (22) ou bien une surface de liaison (20) approximativement en V, et dans lequel ces au moins deux éléments sont positionnés et reliés mutuellement par l'intermédiaire de ce(tte) contour (22) ou bien surface de liaison (20) en V, **caractérisé par le fait qu'**une soudure est réalisée le long de la surface de liaison (20) ainsi que de la face frontale avant (16) du longeron (14).

2. Porte-outil selon la revendication 1, dans lequel lesdits au moins deux éléments sont disposés de manière approximativement symétrique l'un par rapport à l'autre.

3. Porte-outil selon la revendication 1, dans lequel l'un au moins desdits au moins deux éléments est réalisé en tant que corps creux.

4. Porte-outil selon l'une quelconque des revendications précédentes, dans lequel l'un au moins desdits au moins deux éléments présente un contour (22) approximativement en V.

5. Porte-outil selon l'une quelconque des revendications précédentes, dans lequel l'un au moins desdits au moins deux éléments présente une surface de liaison (20) approximativement en V.

6. Porte-outil selon l'une quelconque des revendications précédentes, dans lequel la surface de liaison (20) approximativement en V ou le contour (22) approximativement en V sont pourvus d'arrondis sur leurs zones d'extrémité.

7. Porte-outil selon l'une quelconque des revendications précédentes, dans lequel l'un au moins desdits au moins deux éléments présente des dispositifs de montage (26).

8. Porte-outil selon l'une quelconque des revendications précédentes, dans lequel l'un au moins desdits au moins deux éléments est conçu en tant que pièce en tôle.

9. Porte-outil selon l'une quelconque des revendications précédentes 3 à 8, dans lequel ledit au moins un élément conçu en tant que corps creux est réalisé en tant que profilé creux.

10. Porte-outil selon l'une quelconque des revendications précédentes 3 à 8, dans lequel ledit au moins un élément conçu en tant que corps creux est réalisé en tant que tube.

11. Porte-outil selon l'une quelconque des revendications précédentes 3 à 8, dans lequel ledit au moins un élément conçu en tant que corps creux est réalisé en tant que pièce d'hydroformage.

12. Porte-outil selon l'une quelconque des revendications précédentes 3 à 8, dans lequel ledit au moins un élément conçu en tant que corps creux présente une section transversale au moins approximativement carrée.

13. Porte-outil selon l'une quelconque des revendications précédentes 3 à 8, dans lequel ledit au moins un élément conçu en tant que corps creux présente des sections transversales différentes.

14. Porte-outil selon l'une quelconque des revendications précédentes, dans lequel l'un au moins desdits au moins deux éléments est réalisé en tant que pièce forgée.

15. Porte-outil selon l'une quelconque des revendications précédentes, dans lequel l'un au moins desdits au moins deux éléments est réalisé en tant que pièce coulée.
